# FASCICULE DE BREVET EUROPEEN

(11) **EP 4 033 680 B1**
(45) Date de publication et mention de la délivrance du brevet: **25.02.2026**
(21) Numéro de dépôt: 22151093.6
(22) Date de dépôt: 12.01.2022
(51) Int. Cl.: H04J 3/06, G06F 1/12

(54) **PROCÉDÉ DE SYNCHRONISATION DE DOMAINES TEMPORELS D'UN SYSTÈME SUR PUCE**
VERFAHREN ZUR SYNCHRONISIERUNG VON ZEITDOMÄNEN EINES SYSTEMS AUF EINEM CHIP
METHOD FOR TIME FIELD SYNCHRONISATION OF A CHIP-BASED SYSTEM.

(30) Priorité: 26.01.2021 FR 2100697
(43) Date de publication de la demande: 27.07.2022
(73) Titulaire: STMICROELECTRONICS (GRENOBLE 2) SAS, 38000 Grenoble (FR); STMicroelectronics (Rousset) SAS, 13790 Rousset (FR)
(72) Inventeur: ONDE, Vincent, 13710 FUVEAU (FR); EMSLIE, Diarmuid, 38000 GRENOBLE (FR); VALDENAIRE, Patrick, 06330 ROQUEFORT LES PINS (FR)
(74) Mandataire: Casalonga

(56) Documents cités:
- US-A1- 2018 227 067
- US-A1- 2019 165 927
- US-A1- 2020 133 330

## Description

Des modes de réalisation et de mise en œuvre de l'invention concernent les systèmes sur puce, en particulier la synchronisation de domaines temporels dans un système sur puce.

Dans les appareils électroniques comprenant plusieurs microprocesseurs ou microcontrôleurs, il est nécessaire de partager une vue commune du temps entre eux.

On désigne de manière usuelle un système sur puce comme étant un système embarqué dans un même circuit intégré comportant un microprocesseur ou microcontrôleur et d'autres dispositifs, tels que par exemple au moins une interface de communication.

Le temps partagé peut être un temps global, c'est-à-dire un temps absolu par exemple issu d'une date réelle, ou un temps local, appelé temps de réseau, n'ayant pas forcément de référence absolue mais identique à tous les éléments d'un réseau.

Les informations temporelles échangées doivent être précises, par exemple d'un niveau inférieur à la microseconde, et synchronisées, afin que les processus distribués puissent être lancés simultanément, comme par exemple une commande de mouvement multiaxes pour la robotique.

Le partage des informations temporelles se fait par le biais d'une interface de communication, telle qu'une interface d'interconnexion de composants périphériques express « PCIe » (pour « Peripheral Component Interface express » en anglais), ou une interface de réseau filaire usuellement appelé « Ethernet ». Les interfaces PCIe et Ethernet sont bien connues de l'homme de l'art.

Le document US 2020/133330 décrit une procédé de synchronisation de plusieurs domaines temporels et un protocole de mesure temporelle de précision « PTM » d'une interface d'interconnexion de composants périphériques express, PCIe.

Les interfaces de communication sont typiquement destinées à fonctionner selon des protocoles de communications spécifiques, et les protocoles de communication peuvent prévoir des partages d'informations temporelles spécifiques.

En conséquence, chaque interface de communication est typiquement adaptée pour un protocole de partage de temps spécifique et on parle de « domaines temporels » pour les différentes visions du temps obtenues par les différentes interfaces de communications d'un système sur puce.

En particulier, les interfaces PCIe prévoient le partage d'informations temporelles selon un processus appelé mesure temporelle de précision (usuellement « PTM » pour « Precision Time Measurement » en anglais) dans lequel un dispositif « maître » appelé racine complexe (usuellement « RC » pour « Root Complex » en anglais) partage des informations temporelles d'une horloge commune sur laquelle se synchronisent les dispositif « esclaves » appelés terminaux (usuellement « EP » pour « End Point » en anglais) ; et, les interfaces Ethernet prévoient le partage d'informations temporelles selon un processus appelé protocole de précision du temps (usuellement « PTP » pour « Precision Time Protocol » en anglais), pour partager une horloge commune entre des terminaux.

Les informations temporelles partagées peuvent être codées différemment selon le protocole de communication utilisé, par exemple le protocole PTM peut prévoir une horloge codée par un mot binaire de 64 bit incrémenté à 250 MHz, tandis que le protocole PTP peut prévoir une valeur numérique représentative des nanosecondes sur 32 bits, et une valeur numérique représentative des secondes sur 32 bits.

Les techniques classiques de partage d'informations temporelles et la synchronisation des systèmes sur puce présentent des difficultés dans la mesure où des domaines temporels utilisés peuvent être disciplinés par des protocoles différents et pas directement compatibles entre eux, comme par exemple les protocoles PTM d'interfaces PCIe et les protocoles PTP d'interfaces Ethernet.

Par ailleurs, il est souhaitable de ne pas introduire de modifications dans les interfaces de communication, étant donné qu'elles présentent typiquement le besoin d'être compatible avec des dispositifs tiers, de façon définie par des normes ou des consensus.

Il existe donc un besoin de pouvoir synchroniser des domaines temporels différents dans un même système sur puce.

Selon un aspect, il est proposé un procédé de synchronisation d'un premier domaine temporel d'un premier dispositif avec un deuxième domaine temporel d'un deuxième dispositif. Le procédé comprend une détection d'au moins un évènement déclencheur périodique généré dans au moins un domaine temporel déclencheur choisi parmi le premier domaine temporel, le deuxième domaine temporel et un troisième domaine temporel d'un troisième dispositif. Le procédé comprend des acquisitions, faites aux instants de détection dudit au moins un évènement déclencheur, des valeurs courantes d'horodatage représentatives des états instantanés du premier domaine temporel, du deuxième domaine temporel et du troisième domaine temporel autre(s) que ledit au moins un domaine temporel déclencheur. Le procédé comprend une comparaison, faite dans le troisième domaine temporel, entre des durées différentielles entre des valeurs courantes d'horodatage respectivement acquises successivement. Le procédé comprend une synchronisation du deuxième domaine temporel avec le premier domaine temporel, à partir de ladite comparaison.

En d'autres termes, le procédé selon cet aspect utilise le troisième domaine temporel comme intermédiaire afin de mesurer un éventuel décalage dans l'écoulement du temps entre le point de vue du premier domaine temporel et le point de vue du deuxième domaine temporel, qui ne sont potentiellement pas directement comparables entre eux.

En effet, la comparaison de la durée écoulée entre deux valeurs d'horodatages d'un domaine temporel avec la durée écoulée dans le troisième domaine temporel entre deux évènements déclencheurs, ou avec la durée écoulée entre deux valeurs d'horodatages d'au moins un autre domaine temporel, permet d'avoir une information de la différence de vitesse d'écoulement du temps entre les deux domaines considérés, c'est-à-dire entre le domaine temporel fournissant la valeur d'horodatage et le domaine temporel fournissant les évènements déclencheurs, ou entre les deux domaines temporels fournissant des valeurs d'horodatage aux instant définis par les évènements déclencheurs.

En outre, le procédé selon cet aspect n'introduit pas de modification fonctionnelle ou structurelle aux éléments du premier domaine temporel ni du deuxième domaine temporel, mais exploite avantageusement des informations d'horodatages usuellement prévues pour synchroniser lesdits domaines temporels, depuis le troisième domaine temporel tiers.

Par exemple, les acquisitions desdites valeurs courantes d'horodatage peuvent être faites aux mêmes instants de détection du même évènement déclencheur périodique, ou à des instants de détection différents d'évènements déclencheurs périodiques différents.

Selon un mode de mise en œuvre, le premier domaine temporel est défini par un protocole de mesure temporelle de précision « PTM » d'une interface d'interconnexion de composants périphériques express « PCIe », le deuxième domaine temporel est défini par un protocole de précision du temps « PTP » d'une interface de réseau « Ethernet », et le troisième domaine temporel est cadencé par une horloge locale en course libre adaptée pour des opérations logicielles.

En effet, un problème existe en particulier dans les systèmes sur puce classiques utilisant à la fois un domaine temporel défini par PTM, et un domaine temporel défini par PTP, étant donné que les interfaces PCIe et Ethernet sont typiquement utilisé et en conséquence très répandues.

Ce mode de mise en œuvre permet ainsi la résolution de ce problème particulier et classiquement très répandu.

Selon un mode de mise en œuvre, ledit au moins un domaine temporel déclencheur comprend le premier domaine temporel, et ledit au moins un évènement déclencheur généré dans le premier domaine temporel se produit lorsqu'une condition est vérifiée sur une transition d'au moins un bit d'une valeur courante d'horodatage représentative de l'état instantané du premier domaine temporel, chaque bit de la valeur courante d'horodatage étant communiqué sur une voie dédiée d'un bus d'horodatage.

D'une part, les évènements déclencheurs peuvent être conditionnés par une combinaison de bits du bus d'horodatage, ce qui permet de construire des évènements déclencheurs « complexes » ayant une périodicité qui n'est pas disponible dans les signaux transitant sur le bus d'horodatage en tant que tels. Cela peut par exemple permettre de construire une période optimisée pour un traitement particulier dans du troisième domaine temporel.

D'autre part, on notera que la communication de chaque bit de la valeur courante d'horodatage sur une voie dédiée d'un bus d'horodatage est notamment utilisée par les interfaces PCIe utilisant la PTM.

Selon un mode de mise en œuvre, ledit au moins un domaine temporel déclencheur ne comprend pas le premier domaine temporel, chaque bit de la valeur courante d'horodatage représentative de l'état instantané du premier domaine temporel est communiqué sur une voie dédiée d'un bus d'horodatage, et ladite acquisition de la valeur courante représentative de l'état instantané du premier domaine temporel comprend un chargement d'un verrou avec les bits présents sur chaque voie du bus d'horodatage, le chargement du verrou étant commandé aux instants de détection dudit au moins un évènement déclencheur périodique.

Là encore, on notera que la communication de chaque bit de la valeur courante d'horodatage sur une voie dédiée d'un bus d'horodatage est notamment utilisée par les interfaces PCIe utilisant la PTM, et ce mode de mise en œuvre permet de façon simple de récupérer la valeur courante d'horodatage du premier domaine temporel, sans modifier les moyens ni le fonctionnement du premier domaine temporel.

Selon un mode de mise en œuvre, ledit au moins un domaine temporel déclencheur comprend le deuxième domaine temporel, et ledit au moins un évènement déclencheur généré dans le deuxième domaine temporel est détecté lorsqu'est généré un signal périodique dans le deuxième domaine temporel.

Ainsi, dans le cas où ledit au moins un domaine temporel comprend à la fois le premier domaine temporel et le deuxième domaine temporel, le procédé comprend des acquisitions de premières valeurs courantes d'horodatage et respectivement de deuxièmes valeurs courantes d'horodatage représentatives des états instantanés du troisième domaine temporel, faites aux instants de détection des premiers évènements déclencheurs issus du premier domaine temporel et respectivement aux instants de détection des deuxièmes évènement déclencheur issu du deuxième domaine temporel. La comparaison est faite entre les durées différentielles entre les premières valeurs courantes d'horodatage, et les durées différentielles entre les deuxièmes valeurs courantes d'horodatage.

Et, dans le cas où ledit au moins un deuxième domaine temporel comprend seulement le deuxième domaine temporel, le procédé comprend des acquisitions de valeurs courantes d'horodatage représentatives des états instantanés du premier domaine temporel ainsi que des acquisitions de valeurs courantes d'horodatage représentatives des états instantanés du troisième domaine temporel, aux instants de détection des deuxièmes évènements déclencheurs issus du deuxième domaine temporel. La comparaison est faite entre les durées différentielles entre les valeurs courantes d'horodatage respectives.

Selon un autre aspect, il est proposé un système, par exemple incorporé de façon intégrée dans un système sur puce, comportant un premier dispositif comprenant un premier compteur configuré pour avoir une valeur courante d'horodatage représentative de l'état instantané d'un premier domaine temporel, un deuxième dispositif comprenant un deuxième compteur configuré pour avoir une valeur courante d'horodatage représentative de l'état instantané d'un deuxième domaine temporel, et un troisième dispositif comprenant un générateur d'horloge locale configuré pour cadencer un troisième domaine temporel. Le troisième dispositif comporte des moyens de synchronisation configurés pour détecter au moins un évènement déclencheur périodique généré dans au moins un domaine temporel déclencheur choisi parmi le premier domaine temporel, le deuxième domaine temporel et le troisième domaine temporel. Les moyens de synchronisation sont configurés pour acquérir, aux instants de détection dudit au moins un évènement déclencheur, les valeurs courantes d'horodatage représentatives du premier domaine temporel, du deuxième domaine temporel et du troisième domaine temporel autre(s) que ledit au moins un domaine temporel déclencheur. Les moyens de synchronisation sont configurés pour comparer des durées différentielles entre des valeurs courantes d'horodatage respectivement acquises successivement. Les moyens de synchronisation sont configurés pour générer une commande adaptée pour synchroniser le deuxième domaine temporel avec le premier domaine temporel, à partir de ladite comparaison.

Les moyens de synchronisation peuvent être configurés pour acquérir lesdites valeurs courantes d'horodatage aux mêmes instants de détection du même évènement déclencheur, ou à des instants de détection différents d'évènements déclencheurs différents.

Selon un mode de réalisation, le premier dispositif comprend une interface d'interconnexion de composants périphériques express « PCIe » configurée pour définir le premier domaine temporel par un protocole de mesure temporelle de précision « PTM », le deuxième dispositif comprend une interface de réseau « Ethernet » configurée pour définir le deuxième domaine temporel par un protocole de précision du temps « PTP », et le générateur d'horloge locale du troisième dispositif est adapté pour cadencer des opérations logicielles.

Selon un mode de réalisation, ledit au moins un domaine temporel déclencheur comprend le premier domaine temporel, le premier compteur est configuré pour communiquer chaque bit de la valeur courante d'horodatage sur une voie dédiée d'un bus d'horodatage, et les moyens de synchronisation sont configurés pour détecter ledit au moins un évènement déclencheur généré dans le premier domaine temporel, lorsqu'une condition est vérifiée sur une transition d'au moins un bit sur la(les) voie(s) respective(s) du bus d'horodatage.

Selon un mode de réalisation, ledit au moins un domaine temporel déclencheur ne comprend pas le premier domaine temporel, le premier compteur est configuré pour communiquer chaque bit de la valeur courante d'horodatage sur une voie dédiée d'un bus d'horodatage, et les moyens de synchronisation comportent un verrou sur le bus d'horodatage et sont configurés pour acquérir la valeur courante représentative de l'état instantané du premier domaine temporel en commandant un chargement du verrou, à l'instant dudit au moins un évènement déclencheur, avec les bits présents sur chaque voie du bus d'horodatage.

Selon un mode de réalisation, ledit au moins un domaine temporel déclencheur comprend le deuxième domaine temporel (éventuellement en outre du premier domaine temporel), et les moyens de synchronisation sont configurés pour détecter ledit au moins un évènement déclencheur généré dans le deuxième domaine temporel, lorsqu'est généré un signal périodique dans le deuxième domaine temporel.

D'autres avantages et caractéristiques de l'invention apparaîtront à l'examen de la description détaillée de modes de mise en œuvre et de réalisation, nullement limitatifs, et des dessins annexés, sur lesquels :
[Fig 1A]
[Fig 1B]
[Fig 1C]
[Fig 1D]
[Fig 2]
[Fig 3]

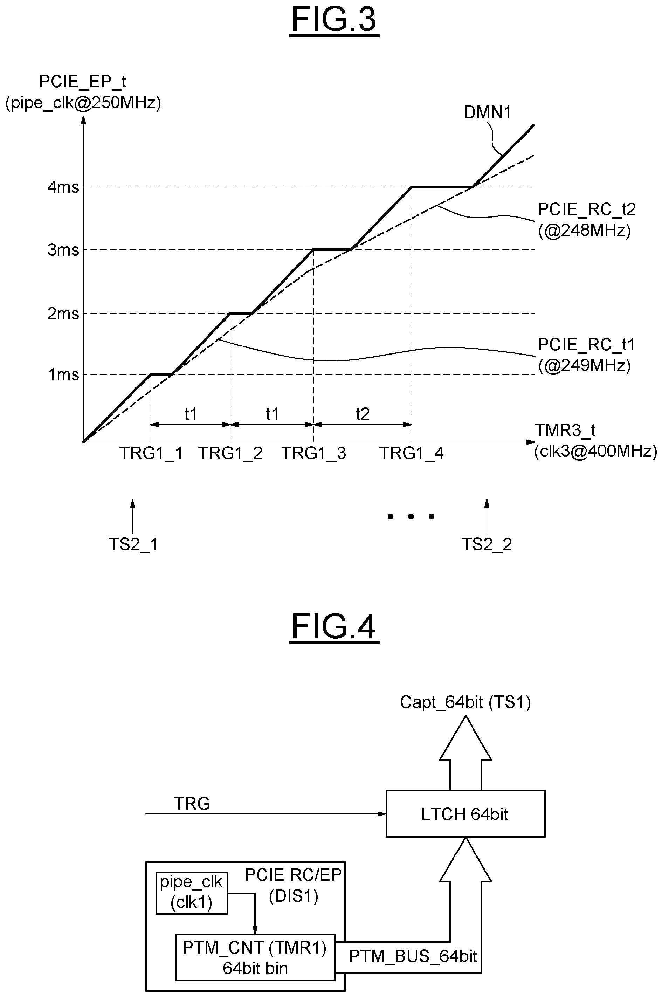

[Fig 4] illustrent des modes de mise en œuvre et de réalisation de l'invention.

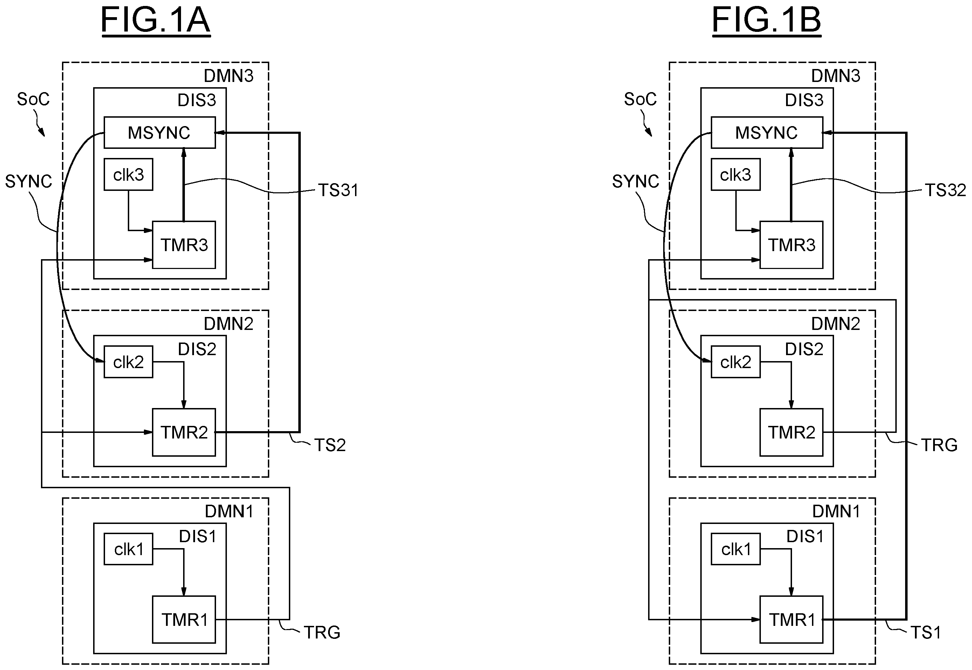

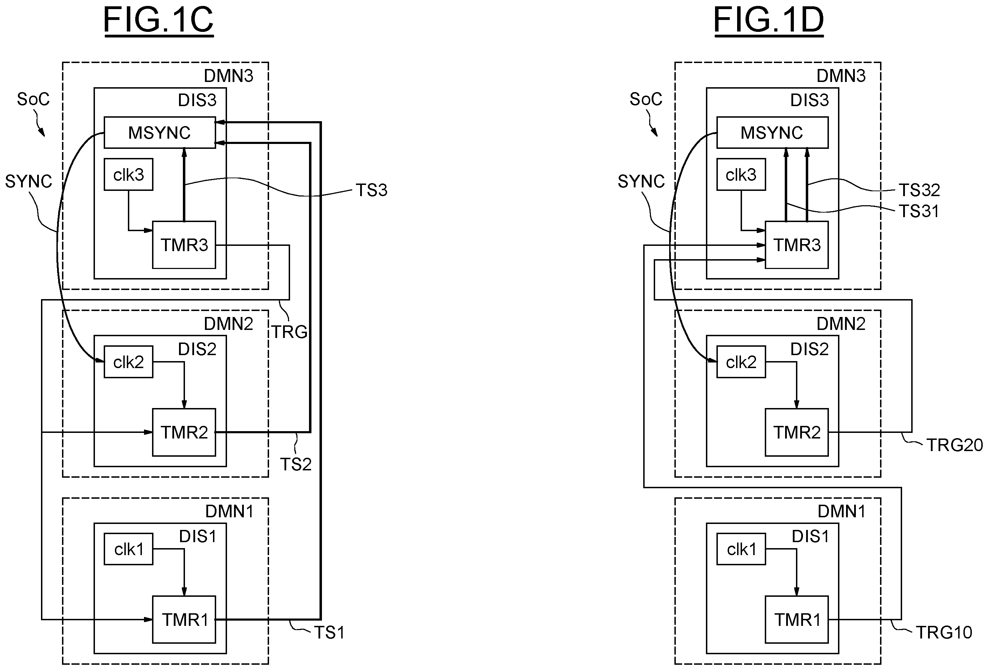

Les figures 1A, 1B, 1C et 1D illustrent quatre alternatives possibles d'un système SoC comportant un premier dispositif DIS1 comprenant un premier compteur TMR1 configuré pour avoir une valeur courante d'horodatage représentative de l'état instantané d'un premier domaine temporel DMN1 ; un deuxième dispositif DIS2 comprenant un deuxième compteur TMR2 configuré pour avoir une valeur courante d'horodatage représentative de l'état instantané d'un deuxième domaine temporel DMN2 ; un troisième dispositif DIS3 comprenant un troisième compteur TMR3 configuré pour avoir une valeur courante d'horodatage représentative de l'état instantané d'un troisième domaine temporel DMN3, et des moyens de synchronisation MSYNC configurés pour synchroniser SYNC le deuxième domaine temporel DMN2 sur le premier domaine temporel DMN1.

Le système SoC peut être intégré dans un même circuit intégré, appelée usuellement dans ce cas « système sur puce », ou bien dans des systèmes sur puces différents et interconnectés par des liaisons filaires, comportant chacun au moins l'un des premier, deuxième et troisième dispositif DIS1, DIS2, DIS3.

Dans la suite, on se placera dans l'exemple non-limitatif où les trois dispositifs DIS1, DIS2, DIS3 et les domaines temporels respectifs DMN1, DMN2, DMN3, appartiennent à un même système sur puce SoC.

Les valeurs courantes d'horodatage, usuellement appelées « timestamp » en anglais, sont des représentations numériques d'un temps instantané, c'est-à-dire « une date » au sens large. Dans le système sur puces SoC, les différentes « dates » d'horodatage utilisées peuvent avoir une amplitude (i.e. valeur maximale) d'un grand nombre d'années (centaine(s) d'années) et une précision (i.e. variation minimale) de l'ordre de la nanoseconde voire moins.

Chaque domaine temporel DMN1, DMN2, DMN3, est cadencé par un générateur de signal d'horloge locale respectif clk1, clk2, clk3. Les générateurs de signaux d'horloge locale clk1, clk2, clk3 peuvent être réalisés sous la forme d'oscillateurs locaux, tels que par exemple usuellement des oscillateurs à cristaux (e.g. du quartz) avec une boucle à verrouillage de phase, et éventuellement compensé en température ; mais aussi d'autres types d'oscillateurs, moins courant dans le domaine de la génération d'horloge, tels que des oscillateurs à fréquence variable, des oscillateurs contrôlés en tension, des boucles à verrouillage de phase, ou encore des synthétiseurs de fréquence analogiques ou numériques.

Selon un exemple particulier et non-limitatif, le troisième dispositif DIS3 peut comprendre ou constituer un microprocesseur ou un microcontrôleur, c'est-à-dire plus largement une unité de calcul adaptée pour mettre en œuvre des opérations logicielles, et le générateur d'horloge locale clk3 du troisième dispositif DIS3 est en particulier destiné à cadencer les opérations logicielles.

Les moyens de synchronisation MSYNC peuvent être mis en œuvre par des moyens matériels appartenant au troisième dispositif DIS3, ou par des moyens logiciels implémentés dans le troisième dispositif DIS3.

Dans les représentations des figures 1A, 1B, 1C et 1D, les générateurs d'horloges locales clk1, clk2, clk3 intègrent les dispositifs respectifs DIS1, DIS2, DIS3, mais pourraient provenir de sources extérieures mais appartenant aux domaines temporels respectifs DMN1, DMN2, DMN3.

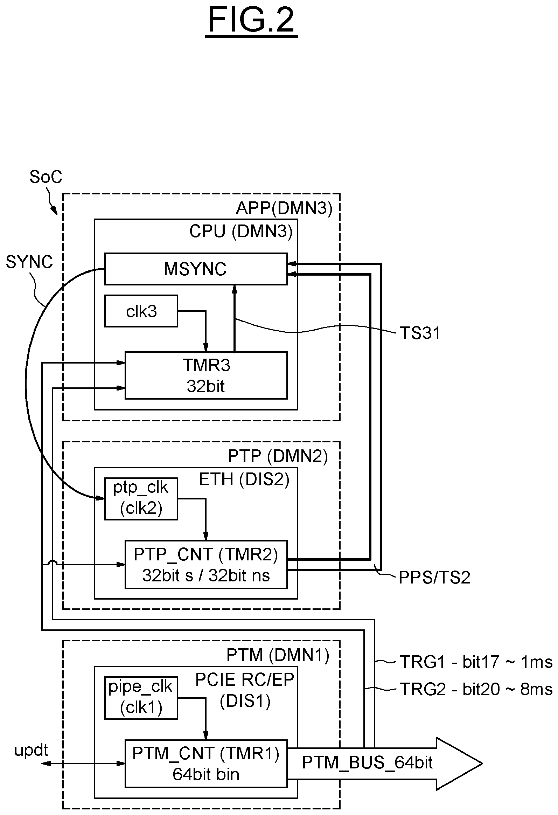

Selon un exemple particulier et non-limitatif (voir ci-après en relation avec les figures 2 à 4), le premier dispositif DIS1 peut comprendre ou constituer une interface d'interconnexion de composants périphériques express « PCIe », acronyme des termes anglais « Peripheral Component Interconnect - express », et dont les spécifications, bien connues de l'homme de l'art, sont gérées et développées par le consortium PCI-SIG (« PCI Special Interest Group »).

Selon un exemple particulier et non-limitatif (décrit ci-après en relation avec les figures 2 à 4), le deuxième dispositif DIS2 peut comprendre ou constituer une interface de réseau physique filaire « Ethernet », par exemple telle que défini par la norme IEEE802.3 et ses variantes, bien connues de l'homme de l'art.

Cela étant, le premier dispositif DIS1 et le deuxième dispositif DIS2 peuvent comprendre ou constituer d'autres technologies (typiquement des interfaces de communications) adaptées pour échanger des informations temporelle afin de synchroniser des domaines temporels distinct, telles que notamment les interfaces CAN (pour « Controller Area Network » en anglais) et les variantes FDCAN (pour « Flexible Data CAN » en anglais) ou TTCAN (pour « Time Triggered CAN » en anglais), mais aussi les communication 4G, 5G, LTE qui ont des possibilités de synchronisation de l'ordre de la microseconde.

La figure 1A illustre une première alternative de la configuration des moyens de synchronisation MSYNC, intégrés au troisième dispositif DIS3, pour synchroniser SYNC le deuxième domaine temporel DMN2 sur le premier domaine temporel DMN1 du système sur puce SoC.

Dans cette première alternative, les moyens de synchronisation MSYNC sont configurés pour détecter un évènement déclencheur TRG généré périodiquement dans le premier domaine temporel DMN1. Le premier domaine temporel DMN1 est nommé à cet égard « domaine temporel déclencheur ».

La durée de la période de l'évènement déclencheur, considérée dans le premier domaine temporel DMN1, peut être connue par les moyens de synchronisation MSYNC par construction.

Les moyens de synchronisation MSYNC sont configurés pour acquérir les valeurs courantes d'horodatage TS2 représentatives des états instantanés du deuxième domaine temporel DMN2, aux instants de détection successifs de l'évènement déclencheur périodique TRG.

Les moyens de synchronisation MSYNC sont configurés pour comparer une durée différentielle entre des évènements déclencheurs successifs TRG avec une durée différentielle entre des valeurs courantes d'horodatage TS2 respectivement acquises successivement.

Par « durée différentielle », on entend la valeur de la différence entre deux des mesures considérées, c'est-à-dire la différence entre les valeurs d'horodatages, ou bien la différence de temps entre des évènements déclencheurs.

La durée différentielle entre des évènements déclencheurs successifs TRG est par exemple faite en connaissance préalable de leur périodicité dans le premier domaine temporel DMN1, et/ou par une mesure de la durée différentielle entre des valeurs courantes d'horodatages TS31 du troisième domaine temporel DMN3 acquises aux moments de détections des évènements déclencheurs TRG issus du premier domaine temporel DMN1.

En effet, d'une part les moyens de synchronisation MSYNC ont acquis une information sur l'écoulement du temps dans le premier domaine temporel DMN1 par les instants de détections des évènements déclencheurs périodiques TRG. Ainsi, les moyens de synchronisation MSYNC peuvent par exemple détecter un ralentissement de l'écoulement du temps dans le premier domaine temporel DMN1 si la période entre deux détections de l'évènement déclencheur TRG augmente.

D'autre part, les moyens de synchronisation MSYNC ont acquis une information sur l'écoulement du temps dans le deuxième domaine temporel DMN2 par les valeurs courantes d'horodatages TS2. La différence entre des valeurs d'horodatage TS2 fournissent en effet la durée écoulée entre les évènements déclencheurs correspondants, considérée cette fois dans le deuxième domaine temporel DMN2.

Enfin, les moyens de synchronisation MSYNC sont configurés pour générer une commande SYNC adaptée pour synchroniser le deuxième domaine temporel DMN2 avec le premier domaine temporel DMN1, à partir de ladite comparaison.

En particulier, la commande SYNC est adaptée pour ajuster la fréquence, et éventuellement la phase, du signal d'horloge locale générée par le générateur d'horloge locale clk2 du deuxième domaine temporel DMN2.

En effet, à partir de l'information sur l'écoulement du temps dans le premier domaine temporel DMN1 et de l'information sur l'écoulement du temps dans le deuxième domaine temporel DMN2, les moyens de synchronisation MSYNC peuvent calculer une correction à appliquer dans le deuxième domaine temporel DMN2 pour qu'il corresponde au premier domaine temporel DMN1.

Par exemple, si l'écoulement du temps dans le premier domaine temporel DMN1 a ralenti, la commande SYNC peut comprendre une réduction de la fréquence de l'horloge générée par le générateur d'horloge locale clk2 du deuxième domaine temporel DMN2.

Selon un autre exemple de synchronisation, si la durée entre deux évènements déclencheurs TRG, obtenue par la différence entre les valeurs d'horodatages TS2 et donc considérée dans le deuxième domaine temporel DMN2, diffère de la durée entre les évènements déclencheurs TRG correspondant, considérée dans le premier domaine temporel DMN1 en connaissance préalable de la périodicité des évènements déclencheurs TRG ou bien considérée dans le troisième domaine temporel DMN3, la commande SYNC peut ajuster la fréquence de l'horloge clk2 du deuxième domaine temporel DMN2, pour égaliser la mesure du temps dans le deuxième domaine temporel DMN2 à la mesure du temps dans le premier domaine temporel DMN1.

En fait, les moyens de synchronisation MSYNC sont capables d'identifier une relation linéaire (par exemple en « y=ax+b ») entre le temps (« y ») du premier domaine temporel DMN1 et le temps (« x ») du deuxième domaine temporel DMN1. La commande SYNC permet d'appliquer les paramètres de correction proportionnelle (« a ») et de décalage (« b »).

La figure 1B illustre une deuxième alternative de la configuration des moyens de synchronisation MSYNC, intégrés au troisième dispositif DIS3, pour synchroniser SYNC le deuxième domaine temporel DMN2 sur le premier domaine temporel DMN1 du système sur puce SoC.

Dans cette deuxième alternative, les moyens de synchronisation MSYNC sont configurés pour détecter un évènement déclencheur TRG généré périodiquement dans le deuxième domaine temporel DMN2. Le deuxième domaine temporel DMN2 est nommé à cet égard « domaine temporel déclencheur ».

Les moyens de synchronisation MSYNC sont configurés pour acquérir les valeurs courantes d'horodatage TS1 représentatives des états instantanés du premier domaine temporel DMN1, aux instants de détection successifs de l'évènement déclencheur périodique TRG.

Les moyens de synchronisation MSYNC sont configurés pour comparer une durée différentielle entre des évènements déclencheurs successifs TRG avec une durée différentielle entre des valeurs courantes d'horodatage TS1 respectivement acquises successivement.

La durée différentielle entre des évènements déclencheurs successifs TRG est par exemple faite en connaissance préalable de leur périodicité dans le deuxième domaine temporel DMN2, et/ou par une mesure de la durée différentielle entre des valeurs courantes d'horodatages TS32 du troisième domaine temporel DMN3 acquises aux moments de détections des évènements déclencheurs TRG issus du deuxième domaine temporel DMN2.

Enfin, les moyens de synchronisation MSYNC sont configurés pour générer une commande SYNC adaptée pour synchroniser le deuxième domaine temporel DMN2 avec le premier domaine temporel DMN1, à partir de ladite comparaison.

Là encore, les moyens de synchronisation MSYNC ont acquis des informations représentatives du premier domaine temporel DMN1 et du deuxième domaine temporel DMN2. Les durées différentielles calculées à partir de ces informations vont permettre d'identifier une relation entre l'écoulement du temps dans le deuxième domaine temporel DMN2 par rapport à l'écoulement du temps dans le premier domaine temporel DMN1, afin de paramétrer la commande SYNC de synchronisation du deuxième domaine temporel DMN2.

La figure 1C illustre une troisième alternative de la configuration des moyens de synchronisation MSYNC, intégrés au troisième dispositif DIS3, pour synchroniser SYNC le deuxième domaine temporel DMN2 sur le premier domaine temporel DMN1 du système sur puce SoC.

Dans cette troisième alternative, les moyens de synchronisation MSYNC sont configurés pour détecter un évènement déclencheur TRG généré périodiquement dans le troisième domaine temporel DMN3. Le troisième domaine temporel DMN3 est nommé à cet égard « domaine temporel déclencheur ».

Pour précision de l'usage des termes, étant donné que les moyens de synchronisation MSYNC font partie du troisième dispositif DIS3 du troisième domaine temporel DMN3, on pourrait considérer que les moyens de synchronisation MSYNC sont configurés pour générer eux même les évènements déclencheurs périodiques TRG. Cela étant, en toute rigueur, les évènements déclencheurs TRG sont issus d'un mécanisme de gestion du temps TMR3 (usuellement « timer » en anglais) à partir de l'horloge locale clk3, et les évènements déclencheurs TRG, en tant que tels, ne sont pas générés directement par les moyens de synchronisation MSYNC. Ainsi on considère que les évènements déclencheurs TRG sont générés par le troisième dispositif DIS3, et que les moyens de synchronisation MSYNC du troisième dispositif DIS3 sont configurés pour détecter les évènements déclencheurs TRG.

Les moyens de synchronisation MSYNC sont configurés pour acquérir les valeurs courantes d'horodatage TS1 représentatives des états instantanés du premier domaine temporel DMN1, aux instants de détection successifs de l'évènement déclencheur périodique TRG, et pour acquérir les valeurs courantes d'horodatage TS2 représentatives des états instantanés du deuxième domaine temporel DMN2, aux instants de détection successifs de l'évènement déclencheur périodique TRG.

On notera que lesdites acquisitions TS1, TS2, peuvent être faites aux mêmes instants de détection du même évènement déclencheur périodique TRG, ou à des instants de détection différents d'évènements déclencheurs périodiques différents, en particulier, un évènement déclencheur peut être respectivement attribué à chacun des premier et deuxième dispositifs DIS1, DIS2.

Les moyens de synchronisation MSYNC sont configurés pour comparer la durée différentielle entre les valeurs courantes d'horodatage TS1 du premier domaine temporel DMN1 acquises successivement, avec la durée différentielle entre les valeurs courantes d'horodatage TS2 du deuxième domaine temporel DMN2 acquises successivement.

La comparaison peut en outre tenir compte de la durée différentielle entre les évènements déclencheurs successifs TRG correspondants, en particulier dans le cas où plusieurs évènements déclencheurs distincts sont utilisés.

Enfin, les moyens de synchronisation MSYNC sont configurés pour générer une commande SYNC adaptée pour synchroniser le deuxième domaine temporel DMN2 avec le premier domaine temporel DMN1, à partir de ladite comparaison.

Là encore, les moyens de synchronisation MSYNC ont acquis des informations représentatives du premier domaine temporel DMN1 et du deuxième domaine temporel DMN2 (c'est-à-dire les valeurs courantes d'horodatages TS1, ST2). Les durées différentielles calculées à partir de ces informations vont permettre d'identifier une relation entre l'écoulement du temps dans le deuxième domaine temporel DMN2 par rapport à l'écoulement du temps dans le premier domaine temporel DMN1, afin de paramétrer la commande SYNC de synchronisation du deuxième domaine temporel DMN2.

La figure 1D illustre une quatrième alternative de la configuration des moyens de synchronisation MSYNC, intégrés au troisième dispositif DIS3, pour synchroniser SYNC le deuxième domaine temporel DMN2 sur le premier domaine temporel DMN1 du système sur puce SoC.

Dans cette quatrième alternative, les moyens de synchronisation MSYNC sont configurés pour détecter un premier évènement déclencheur TRG10 généré périodiquement dans le premier domaine temporel DMN1 et un deuxième évènement déclencheur TRG20 généré périodiquement dans le deuxième domaine temporel DMN2. Le premier et le deuxième domaines temporels DMN1, DMN2 sont nommés à cet égard « domaines temporels déclencheurs ».

Les moyens de synchronisation MSYNC sont configurés pour acquérir des premières valeurs courantes d'horodatage TS31 représentatives des états instantanés du troisième domaine temporel DMN3, aux instants de détection successifs du premier évènement déclencheur périodique TRG10.

De façon similaire, les moyens de synchronisation MSYNC sont configurés pour acquérir des deuxièmes valeurs courantes d'horodatage TS32 représentatives des états instantanés du troisième domaine temporel DMN3, aux instants de détection successifs du deuxième évènement déclencheur périodique TRG20.

Les moyens de synchronisation MSYNC sont configurés pour comparer les durées différentielles entre les premières valeurs courantes d'horodatage TS31 respectivement acquises successivement, avec les durées différentielles entre les deuxièmes valeurs courantes d'horodatage TS32 respectivement acquises successivement.

Enfin, les moyens de synchronisation MSYNC sont configurés pour générer une commande SYNC adaptée pour synchroniser le deuxième domaine temporel DMN2 avec le premier domaine temporel DMN1, à partir de ladite comparaison.

Là encore, les moyens de synchronisation MSYNC ont acquis des informations représentatives du premier domaine temporel DMN1 et du deuxième domaine temporel DMN2, dans le point de vue du troisième temporel DMN3. Les durées différentielles calculées à partir de ces informations vont permettre d'identifier une relation entre l'écoulement du temps dans le deuxième domaine temporel DMN2 par rapport à l'écoulement du temps dans le premier domaine temporel DMN1, afin de paramétrer la commande SYNC de synchronisation du deuxième domaine temporel DMN2.

La figure 2 illustre un exemple particulier de réalisation du système sur puce SoC, dans lequel le premier dispositif DIS1 est du type interface d'interconnexion de composants périphériques express « PCIe », et dans lequel le deuxième dispositif DIS2 est du type interface de réseau filaire « Ethernet ».

Le troisième dispositif DIS3 est une unité de calcul du type microprocesseur ou un microcontrôleur CPU, comportant les moyens de synchronisation MSYNC réalisé sous forme matérielle ou logicielle. Le troisième domaine temporel est un domaine temporel d'applications logicielles APP (DMN3).

L'interface PCIE (DIS1) est configurée pour partager des informations temporelles relatives au premier domaine temporel DMN1 par un protocole de mesure temporelle de précision « PTM » (pour « Precision Time Measurement » en anglais).

Dans ce contexte, l'horloge locale pipe_clk (clk1) peut par exemple avoir une fréquence de 250MHz (mégaHertz), c'est-à-dire une période de 4ns (nanosecondes), et le premier compteur PTM_CNT (TMR1) fournit un mot binaire de 64 bits, incrémenté par le cadencement de l'horloge locale pipe_clk à 250MHz. En conséquence, la valeur numérique du premier compteur PTM_CNT (TMR1) correspond à une valeur temporelle en unités de 4ns.

Dans le protocole PTM, le partage des informations temporelles est fait en communiquant chacun des 64 bits de la valeur courante d'horodatage PNT_CNT (TMR1) sur une voie respectivement dédiée d'un bus d'horodatage PTM_BUS_64bit. En conséquence, le bus PTM_BUS_64bit est à une valeur d'horodatage actualisée en permanence.

Par ailleurs, le premier compteur PTM_CNT (TMR1) est capable de recevoir et d'émettre une commande de mise à jour de synchronisation updt, entre différents dispositifs utilisant le protocole PTM.

L'interface Ethernet ETH (DIS2) est configurée pour partager des informations temporelles relatives au deuxième domaine temporel DMN2 par un protocole de précision du temps « PTP » (pour « Precision Time Protocol » en anglais).

Dans ce contexte, l'horloge locale ptp_clk (clk2) peut par exemple avoir une fréquence de comprise entre 125MHz et 200MHz, et le deuxième compteur PTP_CNT (TMR2) peut comprendre deux mots binaires de 32 bits, l'un codant les secondes de la valeur d'horodatage (32bit s), et l'autre codant les nanosecondes de la valeur d'horodatage (32bit ns).

Dans le protocole PTP, le partage des informations temporelles peut être fait via des registres de l'interface Ethernet ETH (DIS2), stockant une valeur d'horodatage TS2, et qui sont lus par les moyens de synchronisation MSYNC. Un signal usuellement appelé pulsation par seconde « PPS », mais qui n'est pas nécessairement limité à une pulsation par seconde, peut être configuré pour déclencher une lecture par les moyens de synchronisation MSYNC dans les registres de l'interface Ethernet ETH (DIS2) à des instants souhaités.

Ainsi, dans cet exemple où le domaine temporel déclencheur comprend le premier domaine temporel PTM (DMN1), c'est-à-dire selon les alternatives décrites précédemment en relation avec les figures 1A ou 1D, au moins un évènement déclencheur périodique TRG1, TRG2 est généré par le premier compteur PTM_CNT (TMR1).

Tirant avantageusement parti de la construction déjà existante du bus PTM_BUS_64bit dans les interfaces PCIe, les évènements déclencheurs périodiques TRG1, TRG2 sont définis par une transition (c'est-à-dire un front montant ou un front descendant) d'au moins un signal sur les voies du bus PTM_BUS_64bit.

En effet, le bit de poids le plus faible du bus PTM_BUS_64bit constitue un signal périodique à une période de 4ns, et en particulier le bit de poids 17 (bit17) constitue un signal périodique à une période proche de 1ms et le bit de poids 20 (bit20) constitue un signal périodique à une période proche de 8ms, par le mécanisme d'incrémentation du mot binaire du premier compteur PTM_CNT (TMR1).

Et, dans cet exemple, deux évènements déclencheurs distincts TRG1, TRG2 sont utilisés, le premier évènement déclencheur TRG1 se produisant lors d'un front montant sur le bit 17, et le deuxième évènement déclencheur TRG2 se produisant lors d'un front montant sur le bit 20.

En outre, dans un exemple non-représenté, chaque évènement déclencheur peut être construit par une condition logique sur une transition de plusieurs bits de la valeur courante d'horodatage distribuée sur le bus PTM_BUS_64bit. Cela permet de construire des évènements déclencheurs « complexes » ayant une périodicité qui n'est pas disponible dans les signaux transitant sur le bus d'horodatage PTM_BUS_64bit en tant que tels. Par exemple, une période proche de 1,5ms n'est pas directement disponible sur le bus PTM_BUS_64bit, mais peut être sommairement construite en vérifiant une condition « ET » sur les fronts montants du bit 17 et du bit 16.

Dans l'exemple représenté, les deux évènements déclencheurs TRG1, TRG2 sont détectés par les moyens de synchronisation MSYNC, mais seulement le deuxième évènement déclencheur TRG2 (bit20) commande une acquisition de la valeur courante d'horodatage PPS (TS2) représentative de l'état instantané du deuxième domaine temporel PTP (DMN2).

On se réfère à cet égard à la figure 3.

La figure 3 représente un graphique montrant l'écoulement du temps dans le premier domaine temporel DMN1 sur l'axe des ordonnées PCIE_EP_t, par rapport à l'écoulement du temps dans le troisième domaine temporel APP (DMN3) sur l'axe des abscisses TMR3_t.

Les plateaux dans l'écoulement du temps dans le premier domaine temporel DMN1 montrent un ajustement de l'horloge locale pipe_clk (clk1) de l'interface PCIe du type « terminal » EP (« End Point » en anglais) sur une horloge extérieure d'une interface PCIe du type « complexe racine » RC (« Root Complex » en anglais).

La fréquence de l'horloge extérieure de l'interface PCIe RC peut varier pour des raisons diverses, comme représenté par les traits interrompu PCIE_RC_t1, correspondant à 249MHz, puis par les traits interrompu PCIE_RC_t2, correspondant à 248MHz, tandis que l'horloge locale pipe_clk reste stable à une fréquence de 250MHz.

L'avance du temps PCIE_EP _t dans le domaine temporel de l'interface PCIe EP par rapport au domaine temporel de l'interface PCIe RC est compensé en « arrêtant » sensiblement l'horloge pipe_clk (clk1) durant les plateaux.

Avantageusement, les synchronisations PTM de l'interface PCIe EP sur l'interface PCIe RC sont commandé par le troisième dispositif CPU, via le signal updt (figure 2), après chaque premiers évènements déclencheurs TRG1_1, TRG1_2, TRG1_3, TRG1_4.

En conséquence, plus le domaine temporel de l'interface PCIe RC est lent, plus la durée différentielle t1, t2 entre les évènements déclencheurs TRG1_i est importante, t2>t1.

Parallèlement, les moyens de synchronisation MSYNC lisent les valeurs courantes d'horodatage TS2_1, TS2_2 représentatives des états instantanés du deuxième domaine temporel PTP (DMN2) aux instants de détections des deuxième évènements déclencheurs TRG2 (PPS).

La différence « TRG1_i+1 - TRG1_i », c'est-à-dire les durées t1, t2 dans le troisième domaine temporel TMR3_t (DMN3), est utilisée pour discipliner SYNC le générateur d'horloge locale ptp_clk (clk2) de l'interface Ethernet ETH (DIS2) sur le premier domaine temporel PTM (DMN1), en la comparant à la différence « TS2_j+1 - TS2_j » des valeurs courantes d'horodatage fournies par l'interface Ethernet ETH (DIS2).

En d'autres termes, une comparaison est faite dans le troisième domaine temporel, entre une durée différentielle entre des évènements déclencheurs successifs TRG1_i (avec 1≤i≤4 sur la figure 3), et une durée différentielle entre des valeurs courantes d'horodatage acquises successivement PPS_j (avec 1≤j≤2 sur la figure 3), afin de synchroniser le deuxième domaine temporel DMN2 avec le premier domaine temporel DMN1.

La figure 4 représente un exemple de réalisation avantageux pour les alternatives du système sur puce SoC décrites précédemment en relation avec les figures 1B et 1C, c'est-à-dire les alternatives dans lesquelles le domaine temporel déclencheur ne comprend pas le premier domaine temporel.

Dans cet exemple, le premier dispositif PCIE RC/EP (DIS1) est là encore du type une interface PCIe, et le premier compteur PTM_CNT (TMR1) fournit un mot binaire de 64 bits sur un bus d'horodatage PTM_BUS_64bit de 64 bits, tel que décrit précédemment en relation avec la figure 2.

Les moyens de synchronisation comportent un verrou LTCH de 64 bits, sur les voies respectives du bus d'horodatage PTM_BUS_64bit, afin d'acquérir la valeur courante d'horodatage Capt_64bit (TS1) représentative de l'état instantané du premier domaine temporel DMN1. Un chargement du verrou avec les bits présents sur chaque voie du bus d'horodatage PTM_BUS_64bit est commandé à l'instant dudit au moins un évènement déclencheur TRG, c'est-à-dire par exemple par l'évènement déclencheur TRG lui-même.

Cela permet notamment de ne pas modifier le fonctionnement de l'interface PCIe, qu'elle soit du type EP ou RC, notamment vis-à-vis des mises en œuvre du protocole PTM avec d'éventuels autres dispositif PCIe extérieurs au système sur puce SoC.

## Revendications

1. Procédé de synchronisation d'un premier domaine temporel (DMN1) d'un premier dispositif (DIS1) avec un deuxième domaine temporel (DMN2) d'un deuxième dispositif (DIS2), comprenant :
- une détection d'au moins un évènement déclencheur périodique (TRG) généré dans au moins un domaine temporel déclencheur choisi parmi le premier domaine temporel (DMN1), le deuxième domaine temporel (DMN2) et un troisième domaine temporel (DMN3) d'un troisième dispositif (DIS) ;
- des acquisitions, faites aux instants de détection dudit au moins un évènement déclencheur (TRG), des valeurs courantes d'horodatage (TS1, TS2, TS31, TS32) représentatives des états instantanés du premier domaine temporel (DMN1),du deuxième domaine temporel (DMN2) et du troisième domaine temporel (DMN3) autre(s) que ledit au moins un domaine temporel déclencheur ;
- une comparaison, faite dans le troisième domaine temporel (DMN3), entre des durées différentielles entre des valeurs courantes d'horodatage respectivement acquises successivement (TS1, TS2, TS31, TS32) ; et
- une synchronisation du deuxième domaine temporel (DMN2) avec le premier domaine temporel (DMN1), à partir de ladite comparaison.

2. Procédé selon la revendication 1, dans lequel les acquisitions desdites valeurs courantes d'horodatage (TS1, TS2, TS31, TS32) sont faites aux mêmes instants de détection du même évènement déclencheur périodique (TRG), ou à des instants de détection différents d'évènements déclencheurs périodiques différents (TRG1, TRG2).

3. Procédé selon l'une des revendications 1 ou 2, dans lequel le premier domaine temporel (DMN1) est défini par un protocole de mesure temporelle de précision, PTM, d'une interface d'interconnexion de composants périphériques express, PCIe, (PCIE RC/EP), le deuxième domaine temporel (DMN2) est défini par un protocole de précision du temps, PTP, d'une interface de réseau « Ethernet » (ETH), et le troisième domaine temporel (DMN3) est cadencé par une horloge locale en course libre (clk3) adaptée pour des opérations logicielles (APP).

4. Procédé selon l'une des revendications 1 à 3, dans lequel ledit au moins un domaine temporel déclencheur comprend le premier domaine temporel (DMN1), et ledit au moins un évènement déclencheur (TRG10, TRG1, TRG2) généré dans le premier domaine temporel se produit lorsqu'une condition est vérifiée sur une transition d'au moins un bit (bit17, bit20) d'une valeur courante d'horodatage représentative de l'état instantané du premier domaine temporel, chaque bit de la valeur courante d'horodatage étant communiqué sur une voie dédiée d'un bus d'horodatage (PTM_BUS_64bit).

5. Procédé selon l'une des revendications 1 à 3, dans lequel ledit au moins un domaine temporel déclencheur (DMN2, DMN3) ne comprend pas le premier domaine temporel, chaque bit de la valeur courante d'horodatage (TS1) représentative de l'état instantané du premier domaine temporel (DMN1) étant communiqué sur une voie dédiée d'un bus d'horodatage (PTM_BUS_64bit), et ladite acquisition de la valeur courante (TS1, Capt_64bit) représentative de l'état instantané du premier domaine temporel comprend un chargement d'un verrou (LTCH) avec les bits présents sur chaque voie du bus d'horodatage (PTM_BUS_64bit), le chargement du verrou (LTCH) étant commandé aux instants de détection dudit au moins un évènement déclencheur périodique (TRG).

6. Procédé selon l'une des revendications 1 à 5, dans lequel ledit au moins un domaine temporel déclencheur (DMN1, DMN2) comprend le deuxième domaine temporel (DMN2), et ledit au moins un évènement déclencheur (TRG20) généré dans le deuxième domaine temporel est détecté lorsqu'est généré un signal (PPS) périodique dans le deuxième domaine temporel (DMN2).

7. Système comportant un premier dispositif (DIS1) comprenant un premier compteur (TRM1) configuré pour avoir une valeur courante d'horodatage représentative de l'état instantané d'un premier domaine temporel (DMN1), un deuxième dispositif (DIS2) comprenant un deuxième compteur (TMR2) configuré pour avoir une valeur courante d'horodatage représentative de l'état instantané d'un deuxième domaine temporel (DMN2), et un troisième dispositif (DIS3) comprenant un générateur d'horloge locale (clk3) configuré pour cadencer un troisième domaine temporel (DMN3), le troisième dispositif (DSI3) comportant des moyens de synchronisation (MSYNC) configurés pour :
- détecter au moins un évènement déclencheur périodique (TRG) généré dans au moins un domaine temporel déclencheur choisi parmi le premier domaine temporel (DMN1), le deuxième domaine temporel (DMN2) et le troisième domaine temporel (DMN3) ;
- acquérir, aux instants de détection dudit au moins un évènement déclencheur (TRG), les valeurs courantes d'horodatage (TS1, TS2, TS31, TS32) représentatives du premier domaine temporel (DMN1), du deuxième domaine temporel (DMN2) et du troisième domaine temporel (DMN3) autre(s) que ledit au moins un domaine temporel déclencheur ;
- comparer des durées différentielles entre des valeurs courantes d'horodatage (TS1, TS2, TS31, TS32) respectivement acquises successivement ; et
- générer une commande (SYNC) adaptée pour synchroniser le deuxième domaine temporel (DMN2) avec le premier domaine temporel (DMN1), à partir de ladite comparaison.

8. Système selon la revendication 7, dans lequel les moyens de synchronisation (MSYNC) sont configurés pour acquérir lesdites valeurs courantes d'horodatage (TS1, TS2, TS31, TS32) aux mêmes instants de détection du même évènement déclencheur (TRG), ou à des instants de détection différents d'évènements déclencheurs différents (TRG1, TRG2).

9. Système selon l'une des revendications 7 ou 8, dans lequel le premier dispositif (DIS1) comprend une interface d'interconnexion de composants périphériques express, PCIe, (PCIE RC/EP) configurée pour définir le premier domaine temporel (DMN1) par un protocole de mesure temporelle de précision, PTM, le deuxième dispositif (DIS2) comprend une interface de réseau « Ethernet » (ETH) configurée pour définir le deuxième domaine temporel (DMN2) par un protocole de précision du temps, PTP, et le générateur d'horloge locale (clk3) du troisième dispositif est adapté pour cadencer des opérations logicielles (APP).

10. Système selon l'une des revendications 7 à 9, dans lequel ledit au moins un domaine temporel déclencheur comprend le premier domaine temporel (DMN1), le premier compteur (TMR1) étant configuré pour communiquer chaque bit de la valeur courante d'horodatage sur une voie dédiée d'un bus d'horodatage (PTM_BUS_64bit), et dans lequel les moyens de synchronisation (MSYNC) sont configurés pour détecter ledit au moins un évènement déclencheur (TRG10, TRG1, TRG2) généré dans le premier domaine temporel (DMN1) lorsqu'une condition est vérifiée sur une transition d'au moins un bit (bit17, bit20) sur la(les) voie(s) respective(s) du bus d'horodatage (PTM_BUS_64bit).

11. Système selon l'une des revendications 7 à 9, dans lequel ledit au moins un domaine temporel déclencheur (DMN2, DMN3) ne comprend pas le premier domaine temporel, le premier compteur (TMR1) étant configuré pour communiquer chaque bit de la valeur courante d'horodatage (TS1) sur une voie dédiée d'un bus d'horodatage (PTM_BUS_64bit), et dans lequel les moyens de synchronisation (MSYNC) comportent un verrou (LTCH) sur le bus d'horodatage et sont configurés pour acquérir la valeur courante (TS1, Capt_64bit) représentative de l'état instantané du premier domaine temporel (DMN1) en commandant un chargement du verrou (LTCH), à l'instant dudit au moins un évènement déclencheur (TRG), avec les bits présents sur chaque voie du bus d'horodatage (PTM_BUS_64bit).

12. Système selon l'une des revendications 7 à 11, dans lequel ledit au moins un domaine temporel déclencheur comprend le deuxième domaine temporel (DMN2), et les moyens de synchronisation (MSYNC) sont configurés pour détecter ledit au moins un évènement déclencheur (TRG20) généré dans le deuxième domaine temporel (DMN2), lorsqu'est généré un signal (PPS) périodique dans le deuxième domaine temporel (DMN2).

13. Système selon l'une des revendications 7 à 12, incorporé de façon intégrée dans un système sur puce (SoC).

## Patentansprüche

1. Verfahren zur Synchronisierung eines ersten Zeitbereichs (DMN1) einer ersten Vorrichtung (DIS1) mit einem zweiten Zeitbereich (DMN2) einer zweiten Vorrichtung (DIS2), umfassend:
- eine Erkennung mindestens eines periodischen Auslöseereignisses (TRG), das in mindestens einem Auslösezeitbereich erzeugt wird, der aus dem ersten Zeitbereich (DMN1), dem zweiten Zeitbereich (DMN2) und einem dritten Zeitbereich (DMN3) einer dritten Vorrichtung (DIS) ausgewählt wird;
- Erfassungen, die zu den Zeitpunkten der Erkennung des mindestens einen Auslöseereignisses (TRG) vorgenommen werden, von aktuellen Zeitstempelwerten (TS1, TS2, TS31, TS32), die für die momentanen Zustände des ersten Zeitbereichs (DMN1), des zweiten Zeitbereichs (DMN2) und des dritten Zeitbereichs (DMN3) repräsentativ sind, der bzw. die sich von dem mindestens einen Auslösezeitbereich unterscheiden;
- einen Vergleich, der in dem dritten Zeitbereich (DMN3) vorgenommen wird, zwischen Differenzzeiten zwischen jeweils nacheinander erfassten aktuellen Zeitstempelwerten (TS1, TS2, TS31, TS32); und
- eine Synchronisation des zweiten Zeitbereichs (DMN2) mit dem ersten Zeitbereich (DMN1), ausgehend von dem Vergleich.

2. Verfahren nach Anspruch 1, wobei die Erfassungen der aktuellen Zeitstempelwerte (TS1, TS2, TS31, TS32) zu denselben Erkennungszeitpunkten desselben periodischen Auslöseereignisses (TRG) oder zu unterschiedlichen Erkennungszeitpunkten unterschiedlicher periodischer Auslöseereignisse (TRG1, TRG2) erfolgen.

3. Verfahren nach einem der Ansprüche 1 oder 2, wobei der erste Zeitbereich (DMN1) durch ein Präzisionszeitmessprotokoll, PTM, einer Schnittstelle für die Verbindung von Express-Peripheriekomponenten, PCIE, (PCIE RC/EP), definiert ist, der zweite Zeitbereich (DMN2) durch ein Zeitpräzisionsprotokoll, PTP, einer "Ethernet"-Netzwerkschnittstelle (ETH) definiert ist und der dritte Zeitbereich (DMN3) von einem frei laufenden lokalen Taktgeber (clk3) getaktet wird, der für Softwareoperationen (APP) geeignet ist.

4. Verfahren nach einem der Ansprüche 1 bis 3, wobei der mindestens eine Auslösezeitbereich den ersten Zeitbereich (DMN1) umfasst, und das mindestens eine Auslöseereignis (TRG10, TRG1, TRG2), das in dem ersten Zeitbereich erzeugt wird, eintritt, wenn eine Bedingung bei einem Übergang von mindestens einem Bit (Bit17, Bit20) eines aktuellen Zeitstempelwerts, der für den momentanen Zustand des ersten Zeitbereichs repräsentativ ist, überprüft wird, wobei jedes Bit des aktuellen Zeitstempelwerts über einen dedizierten Kanal eines Zeitstempelbusses (PTM_BUS_64bit) übermittelt wird.

5. Verfahren nach einem der Ansprüche 1 bis 3, wobei der mindestens eine Auslösezeitbereich (DMN2, DMN3) den ersten Zeitbereich nicht umfasst, wobei jedes Bit des aktuellen Zeitstempelwerts (TS1), das für den momentanen Zustand des ersten Zeitbereichs (DMN1) repräsentativ ist, über einen dedizierten Kanal eines Zeitstempelbusses (PTM_BUS_64bit) übermittelt wird, und das Erfassen des aktuellen Wert (TS1, Capt_64bit), der für den momentanen Zustand des ersten Zeitbereichs repräsentativ ist, ein Laden eines Latches (LTCH) mit den auf jedem Kanal des Zeitstempelbusses (PTM_BUS_64bit) vorhandenen Bits umfasst, wobei das Laden des Latches (LTCH) zu den Erkennungszeitpunkten des mindestens einen periodischen Auslöseereignisses (TRG) gesteuert wird.

6. Verfahren nach einem der Ansprüche 1 bis 5, wobei der mindestens eine Auslösezeitbereich (DMN1, DMN2) den zweiten Zeitbereich (DMN2) umfasst, und das mindestens eine Auslöseereignis (TRG20), das in dem zweiten Zeitbereich erzeugt wird, erkannt wird, wenn ein periodisches Signal (PPS) in dem zweiten Zeitbereich (DMN2) erzeugt wird.

7. System mit einer ersten Vorrichtung (DIS1), die einen ersten Zähler (TRM1) aufweist, der so konfiguriert ist, dass er einen aktuellen Zeitstempelwert aufweist, der für den momentanen Zustand eines ersten Zeitbereichs (DMN1) repräsentativ ist, einer zweiten Vorrichtung (DIS2), die einen zweiten Zähler (TMR2) umfasst, der so konfiguriert ist, dass er einen aktuellen Zeitstempelwert aufweist, der für den momentanen Zustand eines zweiten Zeitbereichs (DMN2) repräsentativ ist, und einer dritten Vorrichtung (DIS3), die einen lokalen Taktgeber-Generator (clk3) umfasst, der so konfiguriert ist, dass er einen dritten Zeitbereich (DMN3) taktet, wobei die dritte Vorrichtung (DSI3) Synchronisationsmittel (MSYNC) aufweist, die für Folgendes konfiguriert sind:
- Erkennen mindestens eines periodischen Auslöseereignisses (TRG), das in mindestens einem Auslösezeitbereich erzeugt wird, der aus dem ersten Zeitbereich (DMN1), dem zweiten Zeitbereich (DMN2) und dem dritten Zeitbereich (DMN3) ausgewählt wird;
- Erfassen, zu den Zeitpunkten der Erkennung des mindestens einen Auslöseereignisses (TRG), der aktuellen Zeitstempelwerte (TS1, TS2, TS31, TS32), die für den ersten Zeitbereich (DMN1), den zweiten Zeitbereich (DMN2) und den dritten Zeitbereich (DMN3) repräsentativ sind, der bzw. die sich von dem mindestens einen Auslösezeitbereich unterscheiden;
- Vergleichen von Differenzzeiten zwischen jeweils nacheinander erfassten aktuellen Zeitstempelwerten (TS1, TS2, TS31, TS32); und
- Erzeugen eines Befehls (SYNC), der geeignet ist, um den zweiten Zeitbereich (DMN2) mit dem ersten Zeitbereich (DMN1) anhand des Vergleichs zu synchronisieren.

8. System nach Anspruch 7, wobei die Synchronisationsmittel (MSYNC) so konfiguriert sind, dass sie die aktuellen Zeitstempelwerte (TS1, TS2, TS31, TS32) zu denselben Erkennungszeitpunkten desselben Auslöseereignisses (TRG) oder zu unterschiedlichen Erkennungszeitpunkten verschiedener Auslöseereignisse (TRG1, TRG2) erfassen.

9. System nach einem der Ansprüche 7 oder 8, wobei die erste Vorrichtung (DIS1) eine Schnittstelle für die Verbindung von Express-Peripheriekomponenten, PCIE, (PCIE RC/EP) umfasst, die so konfiguriert ist, dass sie den ersten Zeitbereich (DMN1) durch ein Zeitpräzisionsprotokoll, PTM, definiert, wobei die zweite Vorrichtung (DIS2) eine "Ethernet"-Netzwerkschnittstelle (ETH) umfasst, die so konfiguriert ist, dass sie den zweiten Zeitbereich (DMN2) durch ein Zeitpräzisionsprotokoll, PTP, definiert, und der lokale Taktgeber-Generator (clk3) der dritten Vorrichtung dazu ausgelegt ist, Softwareoperationen (APP) zu takten.

10. System nach einem der Ansprüche 7 bis 9, wobei der mindestens eine Auslösezeitbereich den ersten Zeitbereich (DMN1) umfasst, wobei der erste Zähler (TMR1) so konfiguriert ist, dass er jedes Bit des aktuellen Zeitstempelwerts über einen dedizierten Kanal eines Zeitstempelbusses (PTM_BUS_64bit) übermittelt, und wobei die Synchronisationsmittel (MSYNC) so konfiguriert sind, dass sie das mindestens eine Auslöseereignis (TRG10, TRG1, TRG2), das in dem ersten Zeitbereich (DMN1) erzeugt wird, erkennen, wenn eine Bedingung bei einem Übergang von mindestens einem Bit (Bit17, Bit20) auf dem jeweiligen Kanal/den jeweiligen Kanälen des Zeitstempelbusses (PTM_BUS_64bit) überprüft wird.

11. System nach einem der Ansprüche 7 bis 9, wobei der mindestens eine Auslösezeitbereich (DMN2, DMN3) den ersten Zeitbereich nicht umfasst, wobei der erste Zähler (TMR1) so konfiguriert ist, dass er jedes Bit des aktuellen Zeitstempelwerts (TS1) über einen dedizierten Kanal eines Zeitstempelbusses (PTM_BUS_64bit) übermittelt, und wobei die Synchronisationsmittel (MSYNC) ein Latch (LTCH) auf dem Zeitstempelbus aufweisen und so konfiguriert sind, dass sie den aktuellen Wert (TS1, Capt_64bit), der für den momentanen Zustand des ersten Zeitbereichs (DMN1) repräsentativ ist, erfassen, indem zu dem Zeitpunkt des mindestens einen Auslöseereignisses (TRG) ein Laden des Latches (LTCH) mit den auf jedem Kanal des Zeitstempelbusses (PTM_BUS_64bit) vorhandenen Bits gesteuert wird.

12. System nach einem der Ansprüche 7 bis 11, wobei der mindestens eine Auslösezeitbereich den zweiten Zeitbereich (DMN2) umfasst und die Synchronisationsmittel (MSYNC) so konfiguriert sind, dass sie das mindestens eine Auslöseereignis (TRG20), das in dem zweiten Zeitbereich (DMN2) erzeugt wird, erkennen, wenn ein periodisches Signal (PPS) in dem zweiten Zeitbereich (DMN2) erzeugt wird.

13. System nach einem der Ansprüche 7 bis 12, das integriert in ein System-on-Chip (SoC) eingebaut ist.

## Claims

1. Method for synchronising a first time domain (DMN1) of a first device (DIS1) with a second time domain (DMN2) of a second device (DIS2), comprising:
- a detection of at least one periodic trigger event (TRG) generated in at least one trigger time domain selected from the first time domain (DMN1), the second time domain (DMN2), and a third time domain (DMN3) of a third device (DIS) ;
- acquisitions, made at the times of detecting of at least one trigger event (TRG), of current timestamp values (TS1, TS2, TS31, TS32) representing the instantaneous states of the first time domain (DMN1), of the second time domain (DMN2), and of the third time domain (DMN3), other than said at least one trigger time domain;
- a comparison, made in the third time domain (DMN3), of differential durations between current timestamp values respectively acquired successively (TS1, TS2, TS31, TS32); and
- a synchronisation of the second time domain (DMN2) with the first time domain (DMN1), from said comparison.

2. Method according to claim 1, wherein the acquisitions of said current timestamp values (TS1, TS2, TS31, TS32) are made at the same times of detection of the same periodic trigger event (TRG), or at different times of detection of different periodic trigger events (TRG1, TRG2).

3. Method according to one of claims 1 or 2, wherein the first time domain (DMN1) is defined by a precision time measurement protocol (PTM) for a Peripheral Component Interconnect Express interface, PCIe (PCIE RC/EP), the second time domain (DMN2) is defined by a Precision Time Protocol (PTP) for an Ethernet network interface (ETH), and the third time domain (DMN3) is timed by a free-running local clock (clk3) adapted to software operations (APP).

4. Method according to one of claims 1 to 3, wherein said at least one trigger time domain comprises the first time domain (DMN1), and said at least one trigger event (TRG10, TRG1, TRG2) generated in the first time domain occurs when a condition is met on a transition of at least one bit (bit17, bit20) of a current timestamp value representing the instantaneous state of the first time domain, with each bit of the current timestamp value being communicated over a dedicated channel of a timestamp bus (PTM_BUS_64bit).

5. Method according to one of claims 1 to 3, wherein said at least one trigger time domain (DMN2, DMN3) does not comprise the first time domain, each bit of the current timestamp value (TS1) representing the instantaneous state of the first time domain (DMN1) being communicated over a dedicated channel of a timestamp bus (PTM_BUS_64bit), and said acquisition of the current value (TS1, Capt_64bit) representing the instantaneous state of the first time domain comprises loading a latch (LTCH) with the bits present on each channel of the timestamp bus (PTM_BUS_64bit), the loading of the latch (LTCH) being demanded at the times of detecting said at least one periodic trigger event (TRG).

6. Method according to one of claims 1 to 5, wherein said at least one trigger time domain (DMN1, DMN2) comprises the second time domain (DMN2), and said at least one trigger event (TRG20) generated in the second time domain is detected when a periodic signal (PPS) is generated in the second time domain (DMN2).

7. System including a first device (DIS1) comprising a first counter (TRM1) configured to have a current timestamp value representing the instantaneous state of a first time domain (DMN1), a second device (DIS2) comprising a second counter (TMR2) configured to have a current timestamp value representing the instantaneous state of a second time domain (DMN2), and a third device (DIS3) comprising a local clock generator (clk3) configured to time a third time domain (DMN3), the third device (DIS3) including synchronisation means (MSYNC) configured to:
- detect at least one periodic trigger event (TRG) generated in at least one trigger time domain selected from the first time domain (DMN1), the second time domain (DMN2), and the third time domain (DMN3);
- acquire, at the times of detection of said at least one trigger event (TRG), the current timestamp values (TS1, TS2, TS31, TS32) that represent the first time domain (DMN1), the second time domain (DMN2), and the third time domain (DMN3), other than said at least one trigger time domain;
- compare differential durations between current timestamp values (TS1, TS2, TS31, TS32) respectively acquired successively; and
- generate a command (SYNC) adapted to synchronise the second time domain (DMN2) with the first time domain (DMN1) based on said comparison.

8. System according to claim 7, wherein the synchronisation means (MSYNC) are configured to acquire said current timestamp values (TS1, TS2, TS31, TS32) at the same times of detection of the same trigger event (TRG), or at different times of detection of different trigger events (TRG1, TRG2).

9. System according to one of claims 7 or 8, wherein the first device (DIS1) comprises a peripheral component interconnect express interface, PCIe, (PCIE RC/EP), configured to define the first time domain (DMN1) using a precision time measurement protocol (PTM), the second device (DIS2) comprises an Ethernet network interface (ETH) configured to define the second time domain (DMN2) using a precision time protocol (PTP), and the local clock generator (clk3) of the third device is adapted to time software operations (APP).

10. System according to one of claims 7 to 9, wherein said at least one trigger time domain comprises the first time domain (DMN1), the first counter (TMR1) being configured to communicate each bit of the current timestamp value over a dedicated channel of a timestamp bus (PTM_BUS_64bit), and wherein the synchronisation means (MSYNC) are configured to detect said at least one trigger event (TRG10, TRG1, TRG2) generated in the first time domain (DMN1) when a condition is met on a transition of at least one bit (bit17, bit20) on the respective channel(s) of the timestamp bus (PTM_BUS_64bit).

11. System according to one of claims 7 to 9, wherein said at least one trigger time domain (DMN2, DMN3) does not comprise the first time domain, the first counter (TMR1) being configured to communicate each bit of the current timestamp value (TS1) on a dedicated channel of a timestamp bus (PTM_BUS_64bit), and wherein the synchronisation means (MSYNC) include a latch (LTCH) on the timestamp bus and are configured to acquire the current value (TS1, Capt_64bit) representing the instantaneous state of the first time domain (DMN1) by demanding a loading of the latch (LTCH), at the time of said at least one trigger event (TRG), with the bits present on each channel of the timestamp bus (PTM_BUS_64bit).

12. System according to one of claims 7 to 11, wherein said at least one trigger time domain comprises the second time domain (DMN2), and the synchronisation means (MSYNC) are configured to detect said at least one trigger event (TRG20) generated in the second time domain (DMN2) when a periodic signal (PPS) is generated in the second time domain (DMN2).

13. System according to one of claims 7 to 12, incorporated in a system-on-chip (SoC).
